# EUROPÄISCHE PATENTSCHRIFT

(11) **EP 0 540 130 B1**
(45) Veröffentlichungstag und Bekanntmachung des Hinweises auf die Patenterteilung: **20.09.1995**
(21) Anmeldenummer: 92203987.0
(22) Anmeldetag: 19.02.1991
(51) Int. Cl.: A01K 5/00, B01F 15/00, B01F 7/00, A01F 25/20

(54) **Vorrichtung zum Mischen und dosierten Entladen von Viehfutter oder dergleichen**
Device for mixing and measured delivery of animal fodder or similar
Dispositif de mélange et de dosage de fourrage pour bétail ou similaire

(30) Priorität: 22.03.1990 NL 9000682; 12.09.1990 NL 9002003
(43) Veröffentlichungstag der Anmeldung: 05.05.1993
(62) Teilanmeldung aus: 91200353.0
(73) Patentinhaber: LITECH B.V., NL-7521 PD Enschede (NL)
(72) Erfinder: Liet, Cornelis Hendricus, NL-7581 PJ Losser (NL); Liet, Fredericus, NL-7581 HD Losser (NL)
(74) Vertreter: de Vries, Johannes Hendrik Fokke

(56) Entgegenhaltungen:
- EP-A- 0 014 154
- EP-A- 0 106 713
- EP-A- 0 166 653
- FR-A- 2 331 970
- NL-A- 8 902 190

## Beschreibung

Die Erfindung bezieht sich auf eine Vorrichtung gemäß dem Oberbegriff des Anspruchs 1.

Eine derartige Vorrichtung ist aus der EP-A-0 166 653 bekannt.

Aufgabe der Erfindung ist es eine Vorrichtung dieser Art zu schaffen, wobei die Führungsräder der Förderelemente derart in der Mischkammer unterstützt sind, daß das Viehfutter nicht auf die Unterstützung festlaufen kann.

Zu diesem Zweck ist die Vorrichtung der eingangs genannten Art gemäß der Erfindung gekennzeichnet durch die Merkmale des kennzeichnenden Teils des Anspruchs 1.

Im Folgenden wird die Erfindung an Hand der Zeichnung, in der ein Ausführungsbeispiel der Vorrichtung gemäß der Erfindung sehr schematisch angedeutet ist, näher erläutert.

Figur 1 zeigt eine teilweise offene Seitenansicht einer ersten Ausführungsform der Vorrichtung gemäß der Erfindung.

Figur 2 zeigt schematisch einen Schnitt gemäß der Linie II-II in Figur 1.

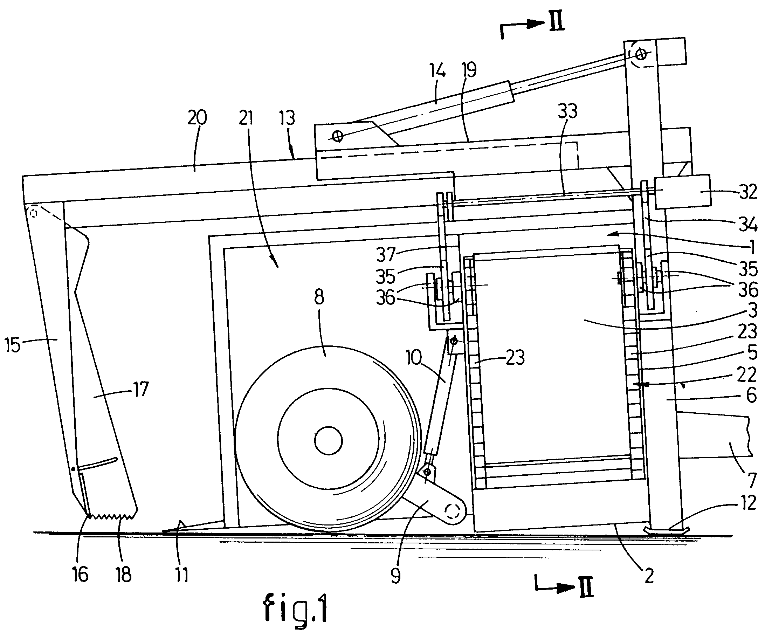

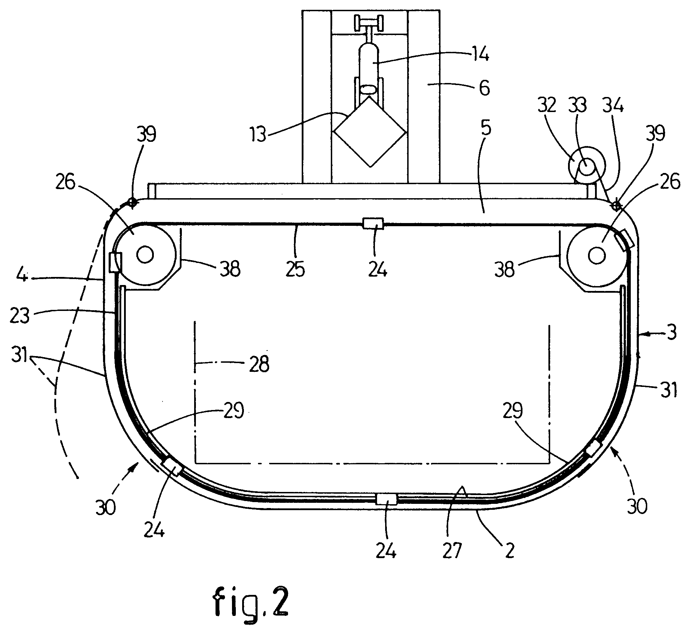

Figur 1 zeigt eine Seitenansicht einer Vorrichtung zum Mischen und dosierten Entladen von Viehfutter oder dergleichen, die eine Mischkammer 1 mit einem Boden 2, zwei in der Verstellrichtung verlaufende, einander gegenüberliegende Seitenwände 3 und 4 und eine Endwand 5 aufweist. Wie hervorgeht aus Figur 2 geht der flache Boden 2 via bogenförmige Teile mit relativ großem Radius über in die vertikalen Seitenwände 3, 4. Anstatt der bogenförmigen Teile kann der Boden 2 auch über einen oder mehrere querlaufende rechte Teile an die vertikalen Seitenwände 3, 4 anschließen. Dabei ist es vor allem wichtig daß wenigstens an der Seite einer Abfuhröffnung ein allmählicher Übergang vom Boden 2 zu den vertikalen Seitenwänden 3, 4 realisiert wird, wie im Folgenden näher erläutert werden wird. In der Nähe der Endwand 5 ist die Mischkammer 1 an ein vertikales Gestell 6 befestigt, das eine teilweise gezeigte Zugstange 7 aufweist, mit der die Vorrichtung an eine Zugmaschine gekuppelt werden kann. Weiter umfaßt die Vorrichtung zwei Räder 8, die drehbar in dem einen Ende der Arme gelagert sind, die von Zilinder-Kolbenaggregaten 10 auf-und-niederbewegbar sind. Figur 1 zeigt nur ein Rad mit Arm und Zilinder-Kolbenaggregat, wobei das Rad 8 sich in einer zum Ausschneiden des Viehfutters aus einem nicht weiter gezeigten Vorrat günstigen Position befindet, in der ein frei ausragendes Ende 11 des Bodens 2 auf der Erde ruht. Dabei stützt das Gestell 6 außerdem mit Stützen 12 auf der Erde.

Ein Schwenkarm 13 ist drehbar gelagert im Gestell 6 und ist mittels eines Zilinder-Kolbenaggregats 14 schwenkbar. Der Schwenkarm 13 trägt an seinem vom Gestell 6 abgewandten Ende ein Schneidschild 15, das an der Unterseite ein nicht näher angedeutetes Schneidorgan 16 aufweist. Weiter ist an einer Seite oder an beiden Seiten des Schneidschildes 15 ein Seitenschneidschild 17 angeordnet, das an seiner Unterseite ebenfalls ein Schneidorgan 18 aufweist. Dieses Seitenschneidschild 17 ist bei dem illustrierten Ausführungsbeispiel an der Oberseite drehbar gelagert, sodaß es sich in eine vom Gestell 6 abgewandte Richtung drehen kann.

Im beschriebenen Ausführungsbeispiel ist der Schwenkarm 13 teleskopisch gebildet und besteht aus einem Kastenträger 19, in dem ein Kastenträger 20 mittels nicht näher angedeuteter Antriebsorgane verfahrbar ist, derart, daß das Schneidschild 15 von der illustrierten Stellung über eine der Endwand 5 gegenüber gelegenen Kammer 21 bis an die Mischkammer 1 grenzend verstellbar ist. Die Kammer 21, die bei Bedarf als Vorratskammer für ausgeschnittenes Viehfutter dienen kann, schließt an eine offene Einführungsseite der Mischkammer 1 an. Die beschriebene Vorrichtung zum Ausschneiden von Viehfutter ist näher erläutert in der niederländischen Patentanmeldung 8902190, wonach hier der Kürze halber verwiesen wird.

In der Mischkammer ist ein Mischorgan angeordnet, das als endloses Förderorgan 22 mit Zwei nahezu parallel laufenden Ketten 23 ausgestattet ist, die als flexibele Förderelemente fungieren, wobei zwischen den Ketten 23 quer auf die Förderrichtung sich erstreckende Mischelemente oder Mitnehmer 24 angeordnet sind. Diese Mischelemente 24 sind auf einem relativ großen Abstand voneinander, zum Beispiel mindestens 50 cm, angeordnet.

Wie insbesondere Figur 2 zeigt, erstreckt sich der Obertrumm 25 der Ketten 23 zwischen dazugehörenden Kettenrädern 26, wobei der übrige Teil der Ketten von einem steifen Führungselement 27 auf eine geringfügige Distanz zu den Seitenwänden 3, 4 und dem Boden 2 der Mischkammer 1 geführt wird.

Wie deutlich hervorgeht aus den Figuren 1 und 2, umschließen die Ketten 23 mit den Mischelementen 24 einen offenen Mischraum, an den das zu mischende Viehfutter von der Kammer 21 her durch einziehen des Schneidschildes 15 einfach zugeführt werden kann, wobei die Ketten 23 und Mischelemente 24 gar keine Behinderung bilden.

In Figur 2 ist mit einer unterbrochenen Linie 28 das Schneidschild schematisch angedeutet, und es geht deutlich hervor, daß das Schneidschild mit den Schneidorganen 16, 18 ohne weiteres bis an den Mischraum grenzend eingefahren werden kann, sodaß kein Viehfutter in der Kammer 21 zurück bleibt und das Ganze aus dem Vorrat genommene Viehfutter in den Mischraum kommt und da gemischt wird. Das Schneidschild 15 sperrt die Mischkammer 1 über die ganze Grenzebene zwischen der Mischkammer 1 und der Kammer 21 nahezu völlig ab. Außerdem geht aus Figur 2 hervor, daß das ebene Teil des Bodens 2 kleiner ist als die Breite des Schneidschildes 15, sodaß bei einer gewissen Breite des Schneidschildes 15 die totale Breite der Vorrichtung beschränkt werden kann.

Die Führungselemente 27 sind zwischen den Teilen die sich entlang dem Boden 2 und den Seitenwänden 3, 4 erstrecken jeweils mit zwei nahezu bogenförmigen Übergangsabschnitten 29 ausgestattet, mit einem Radius von mindestens 20 cm. In der Praxis wurden sehr gute Resultate erlangt mit einem Radius von 50-60 cm. Diese Übergangsabschnitte 29 folgen dem bogenförmigen Übergang des Bodens 2 in die vertikalen Seitenwände 3, 4, sodaß auch hier die Ketten 23 auf einer geringfügigen Distanz zu den Seitenwänden 3, 4 und dem Boden geführt werden. Die Mischelemente 24 durchlaufen daher eine Bewegungsbahn in der Mischkammer 1, die an den Boden 2 und an die Seitenwände grenzt, wobei der Oberteil 25 dieser Bewegungsbahn beidseitig über, bei dem beschriebenen Ausführungsbeispiel von Kettenrädern 26 bestimmte, Übergangsabschnitte auf die Bewegungsbahn entlang den Seitenwänden 3 bzw. 4 anschließt.

In der beschriebenen Ausführungsform ist zur Stelle der Übergangsabschnitte 29 in jeder Seitenwand 3 bzw. 4 eine Abfuhröffnung 30 angebracht, die mit einer Klappe 31 absperrbar ist. Es ist jedoch auch möglich nur eine der Seitenwände 3, 4 mit einer Abfuhröffnung mit dazugehörender Klappe zu gestalten. In diesem Fall können der Übergang des Bodens 2 zur Seitenwand ohne Abfuhröffnung und die dazugehörenden Führungselemente 27 mit Übergängen mit beträchtlich kleinerem Radius gebildet werden. Ein allmählicher Übergang bleibt bevorzugt, weil dadurch eine bessere Mischfunktion erreicht wird und eine niedrigere Antriebsleistung zum Antreiben der Mischelemente 24 erfordert wird. Wie hervorgeht aus Figur 2 bildet jede Klappe 31 nahezu die ganze Seitenwand 3 bzw. 4. Jede Klappe 31 ist derart bemessen, daß es einen Teil des bogenförmigen Übergangs zwischen der vertikalen Seitenwand 3 bzw. 4 und dem Boden 2 umfaßt. In einer praktischen Ausführungsform umfaßt jede Klappe 31 vorzugsweise einen Bogensektor von ungefähr 30° des Übergangsteils. Die Größe des Bogensektors jeder Klappe 31 bestimmt zusammen mit der Geschwindigkeit, mit der die Ketten 23 angetrieben werden, die Entladegeschwindigkeit der Vorrichtung. Während des Mischens des Viehfutters im Mischraum sind beide Klappen 31 geschlossen. Dabei befindet sich das Schneidschild 15 in eingefahrener Stellung, wobei das Schneidschild 15 sich annähernd in der Grenzebene oder in der von der Endwand 5 abgewandten Eingangsebene, zwischen der Mischkammer 1 und der Kammer 21 befindet und die Mischkammer 1 über diese ganze Eingangsebene abschließt. Zum dosierten Entladen des gemischten Viehfutters wird wahlweise eine der Klappen 31 geöffnet, wobei durch eine übereinstimmende Wahl der Förderrichtung der Ketten 23 das Viehfutter linksherum oder rechtsherum, über die geöffnete Abfuhröffnung 30 der Seitenwand 3 bzw. 4, entladen wird.

Die Klappen 31 sind jeweils mittels einer Welle 39 drehbar in der Vorrichtung montiert, welche Welle 39 auf kurzem Abstand oberhalb der Zahnräder 26 angeordnet ist. Wenn die Klappe 31 in die mit einer Strichellinie angedeutete offene Stellung gebracht wird, entsteht dadurch an der Außenseite der Übergangsteile der Bewegungsbahn der Mischelemente 24 bei den Kettenrädern 26 genügend freier Raum um zu verhindern, daß während des Entladens des Viehfutters über die Abfuhröffnung 30 eventuell von den Mischelementen mitgezogenes Viehfutter, insbesondere kohärentes Silofutter, sich hier verklemmt zwischen der Klappe 31 einerseits und den Mischelementen 24 und dem Kettenrad 26 andererseits. Außerdem ist bei der beschriebenen Ausführung auch bei verschlossenen Abfuhröffnungen 30 oberhalb dieser Übergangsteile der Bewegungsbahn der Mischelemente 24 bei den Kettenrädern 26 genügend freier Raum vorhanden, sodaß an den Wendepunkten für die Mischelemente Viehfutter, das eventuell an einem Mischelement hängen bleibt, einfach dem Übergang zum Obertrumm 25 folgen kann und das Viehfutter sich hier nicht verklemmt, wodurch sonst die Mischelemente 24 festlaufen könnten oder die Wand der Mischkammer 1 verformt werden könnte. Obwohl bei der in der Zeichnung illustrierten Ausführungsform die Klappen 31 parallel zu den betreffenden Teilen der Bewegungsbahn der Mischelemente 24 laufen, ist es auch möglich die Vorrichtung so zu gestalten, daß bei geschlossener Abfuhröffnung 30 die Distanz zwischen der Klappe 31 und der Bewegungsbahn der Mischelemente 24 an der Oberseite der Klappe größer ist als an der Unterseite der Klappe 31. Der Durchgang des von den Mischelementen 24 mitgezogenen Viehfutters kann dadurch verbessert werden.

Wegen des relativ großen Radiusses der Übergangsteile 29 und wegen des bogenförmigen Übergangs des Bodens 2 in die vertikalen Wände 3, 4, wird ein allmählicher Übergang des waagerechten Bodenteils der Ketten 23 zu den nahezu vertikalen Teilen der Ketten 23 erhalten. Dadurch wird einerseits eine hervorragende Mischfunktion gewährleistet, weil ein intensives umwühlen des Viehfutters erreicht wird, während andererseits ein Festlaufen der Ketten 23 und der Mischelemente 24 wirksam vermieden wird. Die erforderte Antriebsleistung ist wegen der beschriebenen Führung der Ketten 23 und der Mischelemente 24 relativ niedrig. Bei einem abrupten Übergang des Bodens 2 in die vertikalen Seitenwände 3, 4 würden die Mischelemente 24 das Viehfutter gegen die Seitenwand 3 bzw. 4 drücken und würden die Mischelemente 24 und die Ketten 23 in dem sich an der Seitenwand 3 bzw. 4 anhäufenden Viehfutter festlaufen. Außerdem bewirkt der beschriebene allmähliche Übergang des Bodens 2 in die Seitenwände 3, 4, daß das Viehfutter bei geöffneter Klappe 31 dosiert entladen wird. Wie oben schon bemerkt wurde, wird ein optimales Resultat erlangt, wenn jede Klappe 31 einen Bogensektor von ungefähr 30° des Übergangsteils umfaßt, sodaß der Boden 2 dann bei jeder Abfuhröffnung 30 einen Bogensektor von ungefähr 60° afweist. Dadurch wird erreicht, daß jedes Mischelement 24 nur einen Teil des von diesem Mischelement entlang dem Boden 2 geförderten Viehfutters über die Abfuhröffnung entladen kann, wobei der übrige Teil zurückfällt in die Mischkammer 1. Je nachdem die Länge des Bogensektors des Bodens 2, oder mehr im Allgemeinen der Neigungswinkel des Bodens 2 an der Endkante bei der Abfuhröffnung 30 zunimmt, wird weniger Viehfutter abgegeben und fällt mehr Viehfutter in die Mischkammer zurück. Dadurch, daß die bogenförmigen Übergänge zwischen dem Boden 2 und den Seitenwänden 3, 4 zum Teil eine Fortsetzung des Bodens 2 und zum Teil ein Teil der Klappen 31 bilden, wird ebenfalls erreicht, daß bei einer beschränkten Breite der Vorrichtung das Viehfutter über die Abfuhröffnung 30 zum Futterplatz des Viehs entladen werden kann.

Figur 1 zeigt einen Antriebsmotor 32 der über eine Welle 33 und Ketten 34 Kettenräder 35 antreibt, welche Kettenräder 35 beiderseits des Mischraums auf derselben Welle befestigt sind wie das an der betreffenden Seite gelegene Kettenrad 26. Auf diese Weise wird ein einfacher Antrieb der Ketten 23 erlangt, wobei ein relativ langsamer Antrieb der Ketten 23 erhalten wird ohne Verwendung teurer Verzögerungsorgane.

Die Wellen der Kettenräder 26 und 35 sind in zwei Stützen 36 außerhalb des Mischraums gelagert. Dadurch wird erreicht, daß sich im Mischraum, zwischen den gegenüber einander liegenden Kettenrädern, keine Wellen erstrecken, sodaß das Viehfutter nicht an derartigen Wellen festlaufen kann.

Da die Breite der Kammer 21 nur wenig größer ist als die Breite des Schneidschildes 15, befindet sich im Bereich des Übergangs der Kammer 21 zum Mischraum 1 eine Querwand 37. An dieser Querwand 37 ist das Führungselement 27 befestigt für die an dieser Seite des Mischraums angeordnete Kette 23. Das andere Führungselement 27 für die andere Kette 23 ist an der Endwand 5 befestigt. Die Führungselemente 27 können z.B. einen Kunststoffstreifen umfassen, der an einem Metallträger befestigt ist.

Bei jedem Kettenrad 26 ist ein Abschirmungsstreifen 38 angeordnet, der das Viehfutter möglichst weit von den Kettenrädern 26 entfernt hält.

Die beschriebene Vorrichtung hat den Vorteil, daß ein völlig offener Mischraum vorhanden ist, in den das Viehfutter von der offenen Einführungsseite her ohne Behinderungen zugeführt werden kann. Da die Ketten 23 ganz nahe entlang dem Boden 2 und den Seitenwänden 3, 4 geführt werden, wird eine Förderbewegung des zu mischenden Viehfutters entlang dem Umkreis dieses Mischraums erhalten, wobei das Viehfutter sozusagen umgewühlt wird, insbesondere im Bereich der Übergangsabschnitte 29. Dabei wird ein Sich-Ineinanderdrehen des Viehfutters zu einem harten Ballen vermieden, sodaß das Viehfutter eine lockere Masse bleibt und das Festlaufen der Mischelemente vermieden wird. Das Teilen der Vorrichtung in eine Mischkammer 1 und eine davon abgesonderte Kammer 21 hat außerdem den Vorteil, daß das in der Vorrichtung anwesende Viehfutter in Teilen gemischt werden kann, sodaß die für den Antrieb der Mischelemente erforderliche Leistung vergleichsweise niedrig ist. Es ist jedoch sicherlich möglich die Vorrichtung ohne Kammer 21 zu gestalten, wobei der Mischkammer 1 nur ein kurzer Raum vorabgeht, in den das Schneidschild 15 nahezu passend eingefahren werden kann.

Die beschriebene Vorrichtung hat außerdem den wichtigen Vorteil, daß die Mischelemente 24 bei geöffneter Abfuhröffnung 30 außerdem als Entladeelemente wirksam sind und das Viehfutter aus der Abfuhröffnung 30 entladen. Dadurch wird kein zusätzliches Abfuhrorgan benötigt.

Außerdem wird durch die gewählte Konstruktion erreicht, daß die Führungselemente 27 während des Mischens nicht schwer belastet werden, weil das Viehfutter die Ketten 23 und die Mischelemente 24 in einer von den Führungselementen 27 abgewandten Richtung belastet.

Obwohl bei der beschriebenen Ausführungsform die Mischelemente 24 von dem endlosen Förderorgan 22 verstellt werden, ist es auch möglich die Mischelemente auf andere Weise entlang dem Umkreis des Mischraumes zu verstellen. Es könnte z.B. auf der Endwand 5 eine entlang dem Umkreis des Mischraumes laufende Führungsbahn angeordnet werden, in der die Mischelemente 24 verstellbar sind.

Die beschriebene Vorrichtung kann auch auf andere Weise als mit Rädern verstellbar sein, z.B. durch Befestigung an die Dreipunktaufhängung einer Zugmaschine. Bei Bedarf kann die Vorrichtung eine stationär aufgestellte Einheit bilden, an die das Viehfutter mit Hilfe anderer Mittel zugeführt wird.

Obwohl bei den beschriebenen Ausführungsformen ein Schneidschild 15 mit angetriebenem Schneidorgan 16 verwendet wird, könnte auch ein andersartig gestaltetes Schneidschild verwendet werden, das an der Unterseite z.B. als Schneidorgan funktionierende feste Zähne aufweist.

Die Erfindung beschränkt sich nicht auf die beschriebenen Ausführungsbeispiele, die im Rahmen der Ansprüche vielfältig variiert werden können.

## Patentansprüche

1. Vorrichtung zum Mischen und dosierten Entladen von Viehfutter oder dergleichen, die eine Mischkammer (1) mit einem Boden (2), zwei einander gegenüberliegende Seitenwände (3, 4) und eine quer zu den Seitenwänden verlaufende Endwand (5), mindesten ein antreibbares in der Mischkammer montiertes Mischelement (24), das sich ungefähr parallel zu den Seitenwänden erstreckt und während des Betriebes eine nahezu geschlossene, teilweise zwischen und teilweise parallel zu den Seitenwänden verlaufende Bahn in der Mischkammer durchläuft, aufweist, wobei in mindestens einer Seitenwand eine von einem Absperrorgan (31) absperrbare Abfuhröffnung (30) zum Entladen von Viehfutter vorgesehen ist, wobei die Bewegungsbahn von dem (jedem) Mischelement an den Boden und die Seitenwände grenzt und entlang der Abfuhröffnung in der (jeder) Seitenwand läuft und das (jedes) Mischelement bei geöffneter Abfuhröffnung als Entladeelement das Viehfutter aus der Abfuhröffnung abführt, und wobei die Mischkammer gegenüber der Endwand eine offene Einführungsseite zum Einführen des Viehfutters oder dergleichen aufweist, wobei Mittel (13, 15) zur Zufuhr des Viehfutters zur Mischkammer von der Einführungsseite her in die Richtung der Endwand vorgesehen sind, wobei das (jedes) Mischelement (24) entlang dem Umkreis eines in der Mischkammer (1) angeordneten Mischraums für das zu mischende Viehfutter verstellbar ist, wobei der Mischraum über die gegenüber der Endwand (5) angeordneten offenen Einführungsseite der Mischkammer zugänglich ist, wobei das (jedes) Mischelement ein Teil eines endlosen Förderorgans (22) ist, das den Mischraum für das zu mischende Viehfutter umschließt und das zwei ungefähr parallel laufende flexibele Förderelemente (23) aufweist, zwischen denen das (jedes) Mischelement (24) angeordnet ist und die jeweils von mindestens zwei Führungsrädern (26) geführt werden, wobei eines der Räder antreibbar ist, **dadurch gekennzeichnet**, daß jedes angetriebene Führungsrad (26) von einer eigenen Welle gestützt wird, die außerhalb des Mischraums angeordnet ist und die außerhalb des Mischraums angetrieben wird mittels einer gemeinsamen, ausserhalb des Mischraums angeordneten Welle (33).

2. Vorrichtung nach Anspruch 1, **dadurch gekennzeichnet**, daß sich der Obertrumm (25) jedes Förderelements (23) zwischen zwei Führungsrädern (26) erstreckt, wobei der übrige Teil jedes Förderelements (23) von einem dazugehörenden steifen Führungsteil (27) geführt wird.

3. Vorrichtung nach Anspruch 2, **dadurch gekennzeichnet**, daß jedes Förderelement (23) zwischen den Teilen die sich entlang dem Boden (2) und einer eine Abfuhröffnung (30) aufweisenden Seitenwand (3, 4) erstrecken, einen Übergangsabschnitt (29) aufweist, der dem Übergangsteil zwischen dem Boden und der Seitenwand folgt.

## Claims

1. A device for the mixing and metered discharge of fodder or the like, having a mixing chamber (1) with a base (2), two facing lateral walls (3, 4) and an end wall (5) which runs transversely to the lateral walls, having at least one driveable mixing element (24) which is mounted in the mixing chamber, extends substantially parallel to the lateral walls and during operation describes in the mixing chamber a path which is virtually closed and runs partially between and partially parallel to the lateral walls, wherein in at least one lateral wall there is provided an outlet opening (30) for fodder discharge which can be closed by means of a shut-off device (31), wherein the path of motion of the (each) mixing element runs adjacent to the base and the lateral walls and runs along the outlet opening in the (each) lateral wall and the (each) mixing element acts as a discharge element when the outlet opening is open and conveys the fodder out of the outlet opening, and wherein the mixing chamber has, opposite the end wall, an open introduction side for the introduction of the fodder or the like, wherein there are provided means (13, 15) for feeding the fodder to the mixing chamber from the introduction side in the direction of the end wall, wherein the (each) mixing element (24) is movable along the circumference of a mixing space, located in the mixing chamber (1), for the fodder to be mixed, wherein the mixing space is accessible via the mixing chamber introduction side which is open and is arranged opposite the end wall (5), wherein the (each) mixing element is part of an endless conveying member (22) which encloses the mixing space for the fodder to be mixed and which has two flexible conveying elements (23) which run substantially parallel, have the (each) mixing element (24) arranged therebetween and are in each case guided by at least two guide wheels (26), wherein one of the wheels is driveable, characterised in that each driven guide wheel (26) is supported by means of its own shaft which is arranged exterior to the mixing space and is driven exterior to the mixing space by means of a shared shaft (33) arranged exterior to the mixing space.

2. A device in accordance with Claim 1, characterised in that the upper strand (25) of each conveying element (23) extends between two guide wheels (26), the remaining part of each conveying element (23) being guided by an associated rigid guide part (27).

3. A device in accordance with Claim 2, characterised in that each conveying element (23) has a transition portion (29) between the parts which extend along the base (2) and a lateral wall (3, 4) with an outlet opening (30), this transition portion (29) following the transition part between the base and the lateral wall.

## Revendications

1. Dispositif pour mélanger et décharger en le dosant du fourrage pour bétail ou similaire, comprenant une chambre de mélange (1) pourvue d'un fond (2), deux parois latérales (3, 4) disposées en vis-à-vis, une paroi d'extrémité (5) transversale aux parois latérales, au moins un élément mélangeur (24) qui est entraîné et est disposé dans la chambre de mélange et qui est sensiblement parallèle aux parois latérales et, lors du fonctionnement, parcourt dans la chambre de mélange un trajet presque fermé, en partie entre les parois latérales et en partie parallèlement à celles-ci, une ouverture de sortie (30) fermée par un organe de fermeture (31) étant prévue dans au moins l'une des parois latérales pour décharger le fourrage pour bétail, le trajet de déplacement (de chacun) des éléments mélangeurs étant adjacent au fond et aux parois latérales et longeant l'ouverture de sortie (de chacune) des parois latérales, et les éléments mélangeurs (chacun d'eux) faisant fonction d'éléments de déchargement pour évacuer le fourrage pour bétail par l'ouverture de sortie lorsqu'elle est ouverte, la chambre de mélange comportant, à l'opposé de la paroi d'extrémité, un côté de chargement ouvert pour charger le fourrage pour bétail ou similaire, des moyens (13, 15) étant prévus pour amener le fourrage pour bétail à la chambre de mélange à partir du côté de chargement en direction de la paroi d'extrémité, les éléments mélangeurs (chacun d'eux) (24) pouvant se déplacer le long de la périphérie d'un espace de mélange situé dans la chambre de mélange (1) et destiné au fourrage pour bétail à mélanger, l'espace de mélange étant accessible par le côté de chargement ouvert de la chambre de mélange situé à l'opposé de la paroi d'extrémité (5), les éléments mélangeurs (chacun d'eux) faisant partie d'un organe transporteur sans fin (22) qui entoure l'espace de mélange du fourrage pour bétail à mélanger et qui comporte deux éléments transporteurs flexibles et sensiblement parallèles (23) entre lesquels sont disposés les éléments mélangeurs (chacun d'eux) (24) et qui sont guidés chacun par au moins deux roues de guidage (26) dont l'une est entraînée, caractérisé en ce que chaque roue de guidage entraînée (26) est supportée par son propre arbre qui est disposé en dehors de l'espace de mélange et est entraîné en dehors de l'espace de mélange au moyen d'un arbre commun (33) disposé en dehors de l'espace de mélange.

2. Dispositif selon la revendication 1, caractérisé en ce que le brin supérieur (25) de chaque élément transporteur (23) s'étend entre deux roues de guidage (26), la partie restante de chaque élément transporteur (23) étant guidée par une partie de guidage rigide correspondante (27).

3. Dispositif selon la revendication 2, caractérisé en ce que, entre les parties qui s'étendent le long du fond (2) et d'une paroi latérale (3, 4) pourvue d'une ouverture de sortie (30), chaque élément transporteur (23) comporte une portion de transition (29) qui épouse la partie de transition entre le fond et la paroi latérale.
